# EUROPEAN PATENT APPLICATION

(11) **EP 3 249 412 A1**
(43) Date of publication of application: **29.11.2017**
(21) Application number: 16171439.9
(22) Date of filing: 25.05.2016
(51) Int. Cl.: G01P 5/06, G01P 5/16, G01P 5/00

(54) **APPARATUS AND METHOD FOR MEASURING A WIND PROPERTY**

(71) Applicant: Airbus DS GmbH, 82024 Taufkirchen (DE)
(72) Inventor: Closs, Dr. Martin, 80336 München (DE); Kurfiss, Florian, 85667 Oberprammern (DE)
(74) Representative: Schicker, Silvia

(57) **Abstract**

The invention relates to an apparatus (1) and a method for measuring a wind property, and a use for such apparatus or method, the apparatus (1) having a measurement device (3) configured to measure a wind property, a drive unit (5) configured to rotate the measurement device (3) around an axis (7), a rotation sensor (13) configured to determine an angular position of the measurement device (3) around the axis (7), and a processing unit (15) configured to determine on the basis of measurement values of the wind property measured by the measurement device (3) at different angular positions during one revolution of the measurement device (3) around the axis (7) at least one of a wind speed and a wind direction.

## Description

The invention relates to an apparatus and a method for measuring a wind property, and the use of such an apparatus or method.

Measurement devices or sensors for measuring a wind property, such as a wind speed or a wind direction, are known in the prior art. For example, cup anemometers, vane anemometers, hot-wire anemometers, laser anemometers, sonic anemometers, and pitot-tube anemometers are capable of measuring a wind speed, while vanes are capable of measuring a wind direction. However, most wind property sensors are static, i.e. pointed in one direction, and lose their signal at medium (ca. 10 m/s) to low (ca. 0,1-1 m/s) ambient wind speeds, e.g. a pitot-tube anemometer measures close to zero pressure difference and a vane cannot align to the wind direction. Therefore, the signal to noise ratio decreases considerably the lower the ambient wind speed is, such that a reliable wind property measurement is made difficult.

The invention is directed towards solving the problem of reliably measuring a wind property in medium to low ambient wind speeds.

This problem is solved by an apparatus, method, and use for such apparatus or method according to the independent claims.

The apparatus for measuring a wind property has a measurement device configured to measure a wind property, a drive unit configured to rotate the measurement device around an axis, a rotation sensor configured to determine an angular position of the measurement device around the axis, and a processing unit configured to determine on the basis of measurement values of the wind property measured by the measurement device at different angular positions during one revolution of the measurement device around the axis at least one of an ambient wind speed and an ambient wind direction. Due to the rotation of the measurement device around the axis, it can be assured that, compared to a static measurement device, an ambient wind speed and/or wind direction can be determined more reliably. Also, due to the induced rotation and the nature of the induced dynamic wind pressure (~speed²), the dynamic pressure caused by the wind speed is amplified which helps in the detection of wind properties in medium to low ambient wind speeds, such that the measurement device is always presented with a strong wind and can accurately measure a wind speed and a wind direction. All of this can be achieved using the aforementioned low cost and low complexity set-up, which is robust against external influences, such as dust, moisture, fog, or sound.

The processing unit may be configured to determine the ambient wind speed or the wind direction on the basis of a maximum and a minimum measurement value during one revolution, preferably on the basis of the difference between the maximum and the minimum measurement value during one revolution, preferably during a current or preceding revolution.

The processing unit may further be configured to determine one of the ambient wind speed and the wind direction on the basis of an amplitude of a sine wave resulting from the measurement values.

The processing unit may be configured to determine the other of the ambient wind speed and the wind direction on the basis of a phase of the sine wave.

The measurement device and the rotation sensor may be configured to capture a wind property measurement value for at least every degree of rotation of the measurement device around the axis, preferably at a rotation rate of at least one revolution per second, preferably at a rotation rate of one to ten revolutions per second.

The apparatus may comprise at least two measurement devices, preferably arranged on one line orthogonal to and through the axis, preferably on one side of the axis or on opposite sides of the axis, preferably differently or equally distanced from the axis.

The wind property measured by the measurement device may be a wind speed or a wind direction.

The measurement device may be connected to the axis by an arm, and preferably a counterweight may be configured to compensate an imbalance created by the rotation of the measurement device around the axis, which counterweight may be preferably arranged on the arm and/or in a different distance to the axis compared to the measurement device, and/or the drive unit may be a motor.

The measurement device may be one of a cup anemometer, vane anemometer, hot-wire anemometer, laser anemometer, sonic anemometer, pitot-tube anemometer, or vane.

The method for measuring a wind property with a wind property measurement apparatus, preferably with at least three wind property measurement apparatus, and/or preferably with a wind property measurement apparatus according to any one of the preceding claims, comprises the steps of rotating a measurement device around an axis, measuring the wind property by the measurement device, while determining the corresponding angular position of the measurement device around the axis for each measurement value of the wind property during one revolution of the measurement device around the axis, and subsequently determining on the basis of the measurement values of the wind property at the corresponding angular position at least one of an ambient wind speed and an ambient wind direction.

The processing unit may determine the ambient wind speed or the ambient wind direction on the basis of a maximum and a minimum measurement value during one revolution, preferably on the basis of the difference between the maximum and the minimum measurement value during one revolution, preferably during a current or preceding revolution.

The processing unit may determine one of the ambient wind speed and the ambient wind direction on the basis of an amplitude of a sine wave resulting from the measurement values.

The processing unit may determine the other of the ambient wind speed and the ambient wind direction on the basis of a phase of the sine wave.

The measurement device and the rotation sensor may capture a wind property measurement value for at least every degree of rotation of the measurement device around the axis, preferably at a rotation rate of at least one revolution per second, preferably at a rotation rate of one to ten revolutions per second.

The use of at least one, preferably at least three, wind property measurement apparatus or a method for measuring a wind property according to any one of the preceding claims in a ground control station and/or a launch system, preferably in a high altitude pseudo-satellite.

Preferred embodiments of the invention will now be described under reference to the accompanied schematic drawings. These drawings show in
- Figure 1: a perspective view of an apparatus with a measurement device and a counterweight interconnected by an arm, wherein the measurement device and the counterweight are rotated around an interposed axis driven by a drive unit;
- Figure 2: a top view of the arm and the measurement device from Figure 1 in four different equidistant (90°) angular positions around the axis during the rotation of the measurement device in a counterclockwise direction, with arrows at each of the positions showing the respective direction of the ambient wind (continuous arrow) and the respective direction of the rotation induced dynamic wind (dashed arrow);

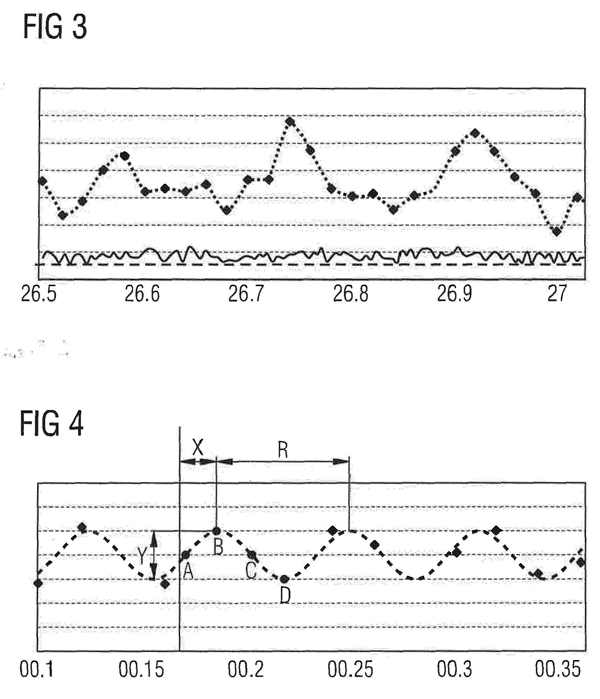

- Figure 3: a diagram of raw measurement values of the pressure (ordinate) measured over time (abscissa) interconnected by a line for three different scenarios: a static ambient pressure in a windless condition (bottom - dashed line), a total static pressure as a sum of the static ambient pressure and a wind caused pressure measured by a static measurement device at medium (ca. 10 m/s) to low (ca. 0,1-1 m/s) ambient wind speeds (middle - continuous line), and a total dynamic pressure as a sum of the static ambient pressure and the dynamic wind caused pressure measured by a rotating measurement device at medium to low ambient wind speeds (top - dotted line);
- Figure 4: a diagram of a smoothened sine wave based on measurement values (diamond shaped dots) of the rotating measurement device such as the measurement values shown in Figure 3; and
- Figure 5: a diagram of a section of a sine wave such as the one shown in Figure 4, with the pressure (ordinate) measured over an angle of rotation of the measurement device around the axis (abscissa).

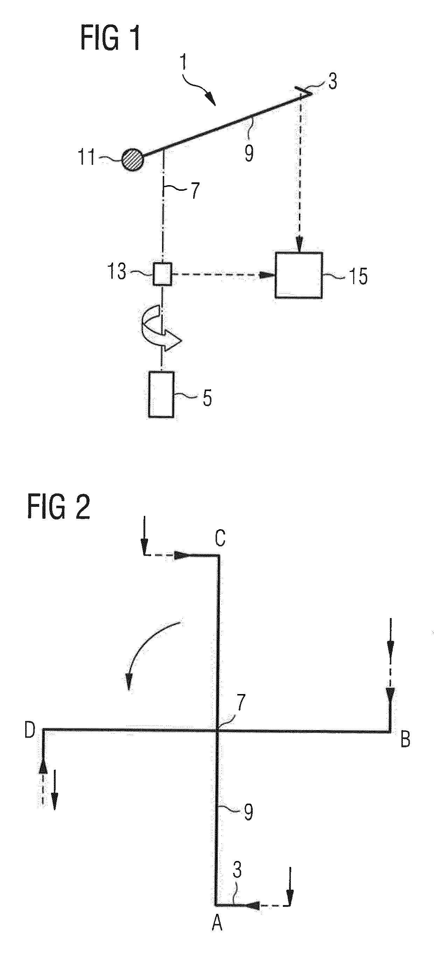

Figure 1 shows a perspective view of an apparatus 1 with a measurement device 3, which measures a wind property such as a wind speed or a wind direction. The measurement device 3 used here is a pitot-tube anemometer, which measures a directional wind speed on the basis of pressure difference. Of course, any other type of measurement device 3 may be used, such as cup anemometers, vane anemometers, hot-wire anemometers, laser anemometers, sonic anemometers, and vanes. The apparatus 1 further has a drive unit 5, which can be an electric motor or any other form of rotation inducing device. The drive unit 5 is configured to cause an axis 7 to rotate. Since the measurement device 3 is connected to the axis 7, here by means of an arm 9, the rotation of the axis 7 induced by the drive unit 5 causes the measurement device 3 to rotate around the axis 7. The measurement device 3 is shown as a short line with one end connected to one end of the arm 9, such that the other end of the short line represents the tip of the measurement device 3 which is pointed in a direction of rotation around the axis 7. In order to compensate an imbalance created by the rotation of the measurement device 3 around the axis 7, the apparatus 1 has a counterweight 11, which is located at the other end of the arm 9 in a different distance to the axis 7 compared to the measurement device 3. A rotation sensor 13 of the apparatus 1 is configured to determine an angular position of the measurement device 3 around the axis 7. The apparatus 1 further has a processing unit 15 which is configured to receive data from the measurement device 3 and the rotation sensor 13 via a wired or wireless connection, and to determine, on the basis of the measurement values of the wind property measured by the measurement device 3 at different angular positions during one revolution of the measurement device 3 around the axis 7, at least one of an ambient wind speed and an ambient wind direction, which determination is explained below.

The drive unit 5 is configured to rotate the measurement device 3 at a preferably constant rotation rate between one to ten revolutions per second around the axis 7. The minimum rotation rate should, however, be one revolution per second and its upper limit depends on the capability of the measurement device 3, the rotation sensor 13, and the processing unit 15 to measure and process the respective measurement values reliably, such that it could be well beyond ten revolutions per second. Regardless of the number of revolutions per second, the measurement device 3, the rotation sensor 13, and the processing unit 15 have to be capable of measuring and processing values for at least every degree of rotation of the measurement device 3 around the axis 7 or for corresponding time intervals, if the rotation rate is constant. The rotation of the measurement device 3 around the axis 7 creates an induced dynamic wind exercising an induced dynamic pressure against the tip of the measurement device 3.

Of course, the apparatus may comprise at least two measurement devices 3, preferably arranged on one line orthogonal to and through the axis 7, preferably on one side of the axis 7 or on opposite sides of the axis 7, preferably differently or equally distanced from the axis 7. Using two opposing measurement devices 3 with the axis 7 there between, allows the pressure difference to be measured, thus eliminating the need for a separate measurement of the static ambient pressure. Placing such measurement devices 3 differently distanced from the axis 7 avoids one of the measurement devices 3 measuring wind in the trailing wake of the preceding measurement device 3. The same consideration applies to the counterweight 11, which is preferably placed in a different distance to the axis 7 compared to the measurement device(s) 3.

Figure 2 shows a top view of the arm 9 and the measurement device 3 in four different equidistant (90°) angular positions A-D around the axis 7 during a rotation of the measurement device 3 around the axis 7 in a counterclockwise direction with arrows at each of the positions A-D showing the respective direction of the ambient wind (continuous arrow) and the rotation induced dynamic wind (dashed arrow).

In position A, the ambient wind pressure caused by the ambient wind has no influence on the measurement device 3, such that only the induced dynamic wind pressure caused by the rotation of the measurement device 3 is measured.

In position B, the measurement device 3 is directed straight against the ambient wind direction such that the induced dynamic wind pressure caused by the rotation of the measurement device 3 is increased by the ambient wind pressure caused by the ambient wind, such that the measurement value measured by the measurement device 3 becomes a maximum.

In position C, the ambient wind pressure, as in Position A, has no influence on the measurement device 3, such that only the induced dynamic wind pressure caused by the rotation of the measurement device 3 is measured.

In position D, the measurement device 3 is directed straight into the ambient wind direction such that the induced dynamic wind pressure caused by the rotation of the measurement device 3 is reduced by the ambient wind pressure caused by the ambient wind, such that the measurement value measured by the measurement device 3 becomes a minimum.

Figure 3 shows a diagram of raw measurement values of the pressure (ordinate) measured over time (abscissa) interconnected by a line. In particular, a static ambient pressure in a windless condition (bottom - dashed line), a total static pressure as a sum of the static ambient pressure and a wind pressure measured by a static measurement device 3 (middle - continuous line) t medium (ca. 10 m/s) to low (ca. 0,1-1 m/s) ambient wind speeds, and a total dynamic pressure as a sum of the static ambient pressure and the induced dynamic wind pressure measured by a rotating measurement device 3 (top - dotted line) at medium to low ambient wind speeds. Comparing the middle and the top lines, it is evident, that the rotation of the measurement device 3 induces a dynamic wind pressure which amplifies the measurement values measured by the measurement device 3 such that the signal to noise ratio is artificially increased and a more reliable determination of the ambient wind speed and/or wind direction can be performed.

Figure 4 shows a diagram of a smoothened sine wave plotted by the processing unit 15 based on measurement values (diamond shaped dots) of the rotating measurement device 3. Since in this case, the wind speed is measured by the measurement device 3, i.e. a pitot-tube anemometer, via a change in pressure, an amplitude Y, i.e. a difference between a maximum and a minimum measurement value, of the sine wave for one revolution R of the measurement device 3 around the axis 7 indicates the ambient wind speed, while a phase X of sine wave indicates the ambient wind direction. The respective positions A-D explained above with reference to Figure 2 are also indicated on the sine wave in this Figure 4.

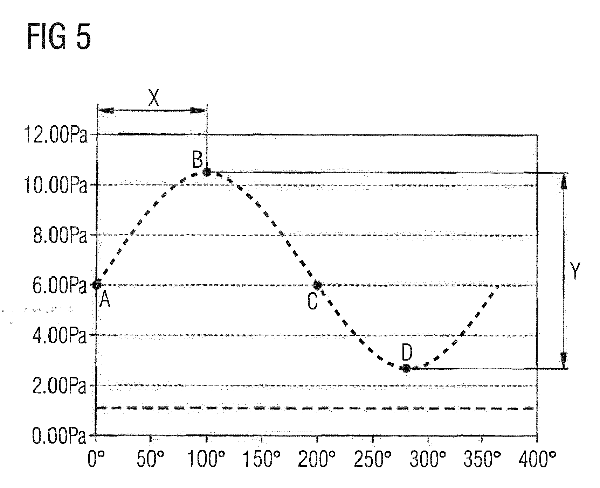

Figure 5 shows a diagram of a section of a sine wave during one revolution R of the measurement device 3 around the axis 7 such as the one from Figure 4, with the pressure (ordinate) measured over an angle of rotation of the measurement device around the axis (abscissa). Here, the static ambient pressure (bottom - dashed line) indicates an approximate pressure area of measurement with a static measurement device 3 at medium to low ambient wind speeds. Using an induced dynamic wind pressure, induced by the rotation of the measurement device 3 around an axis 7, an amplification of the signal is achieved such that even in medium to low ambient wind speeds a reliable measurement and subsequent determination of an ambient wind speed and/or an ambient wind direction can be performed. The respective positions A-D explained above with reference to Figure 2 are also indicated on the sine wave in this Figure 5.

In an alternative embodiment, a measurement device 3, e.g. a vane, which measures a wind direction instead of a wind speed, may be used. In this case, the centrifugal force together with the induced dynamic wind caused by the rotation of the measurement device 3 around the axis 7 leads to a specific orientation of the measurement device 3 relative to the axis 7, which orientation remains constant as long as there is no ambient wind. If there is an ambient wind, the orientation of the measurement device 3 will change cyclically, e.g. at each of the measurement positions (A-D), depending on the wind speed and the wind direction of the ambient wind additionally acting on the measurement device 3. In this case, the determination of an ambient wind speed and/or an ambient wind direction is analog to the previous embodiment.

## Claims

1. Apparatus (1) for measuring a wind property, having
- a measurement device (3) configured to measure a wind property,
- a drive unit (5) configured to rotate the measurement device (3) around an axis (7),
- a rotation sensor (13) configured to determine an angular position of the measurement device (3) around the axis (7), and
- a processing unit (15) configured to determine on the basis of measurement values of the wind property measured by the measurement device (3) at different angular positions during one revolution of the measurement device (3) around the axis (7) at least one of a wind speed and a wind direction.

2. Apparatus (1) according to claim 1, wherein
the processing unit (15) is configured to determine the wind speed or the wind direction on the basis of a maximum and a minimum measurement value during one revolution (R), preferably on the basis of the difference between the maximum and the minimum measurement value during one revolution (R), preferably during a current or preceding revolution (R).

3. Apparatus (1) according to claim 1 or 2, wherein
the processing unit (15) is configured to determine one of the wind speed and the wind direction on the basis of an amplitude (Y) of a sine wave resulting from the measurement values.

4. Apparatus (1) according to claim 3, wherein
the processing unit (15) is configured to determine the other of the wind speed and the wind direction on the basis of a phase (X) of the sine wave.

5. Apparatus (1) according to any one of claims 1 to 4, wherein
the measurement device (3) and the rotation sensor (13) are configured to capture a wind property measurement value for at least every degree of rotation of the measurement device (3) around the axis (7), preferably at a rotation rate of at least one revolution per second, preferably at a rotation rate of one to ten revolutions per second.

6. Apparatus (1) according to any one of claims 1 to 5, wherein
the apparatus (1) comprises at least two measurement devices (3), preferably arranged on one line orthogonal to and through the axis (7), preferably on one side of the axis (7) or on opposite sides of the axis (7), preferably differently or equally distanced from the axis (7).

7. Apparatus (1) according to any one of claims 1 to 6, wherein
the wind property measured by the measurement device (3) is a wind speed or a wind direction.

8. Apparatus (1) according to any one of claims 1 to 7, wherein
the measurement device (3) is connected to the axis (7) by an arm (9), and preferably a counterweight (11) is configured to compensate an imbalance created by the rotation of the measurement device (3) around the axis, which counterweight (11) is preferably arranged on the arm (9) and/or in a different distance to the axis (7) compared to the measurement device (3), and/or the drive unit (5) is a motor.

9. Apparatus (1) according to any one of claims 1 to 8, wherein
the measurement device (3) is one of a cup anemometer, vane anemometer, hot-wire anemometer, laser anemometer, sonic anemometer, pitot-tube anemometer, or vane.

10. Method for measuring a wind property with a wind property measurement apparatus (1), preferably with at least three wind property measurement apparatus (1), and/or preferably with a wind property measurement apparatus (1) according to any one of the preceding claims, comprising the steps of:
- rotating a measurement device (3) around an axis (7),
- measuring the wind property by the measurement device (3), while
- determining the corresponding angular position of the measurement device (3) around the axis (7) for each measurement value of the wind property during one revolution of the measurement device (3) around the axis (7), and subsequently
- determining on the basis of the measurement values of the wind property at the corresponding angular position at least one of a wind speed and a wind direction.

11. Method according to claim 10, wherein
the processing unit (15) determines the wind speed or the wind direction on the basis of a maximum and a minimum measurement value during one revolution (R), preferably on the basis of the difference between the maximum and the minimum measurement value during one revolution (R), preferably during a current or preceding revolution (R).

12. Method according to claim 10 or 11, wherein
the processing unit (15) determines one of the wind speed and the wind direction on the basis of an amplitude (Y) of a sine wave resulting from the measurement values.

13. Method according to claim 12, wherein
the processing unit (15) determines the other of the wind speed and the wind direction on the basis of a phase (X) of the sine wave.

14. Method according to any one of claims 10 to 13, wherein
the measurement device (3) and the rotation sensor (13) capture a wind property measurement value for at least every degree of rotation of the measurement device (3) around the axis (7), preferably at a rotation rate of at least one revolution per second, preferably at a rotation rate of one to ten revolutions per second.

15. Use of at least one, preferably at least three, wind property measurement apparatus (1) or a method for measuring a wind property according to any one of the preceding claims in a ground control station and/or a launch system, preferably in a high altitude pseudo-satellite.

## Amended claims

### Amended claims in accordance with Rule 137(2) EPC.

1. Apparatus (1) for measuring a wind property, having
- at least two measurement devices (3) being configured to measure a wind property,
- a drive unit (5) configured to rotate the measurement devices (3) around an axis (7),
- a rotation sensor (13) configured to determine an angular position of the measurement devices (3) around the axis (7), and
- a processing unit (15) configured to determine on the basis of measurement values of the wind property measured by the measurement devices (3) at different angular positions during one revolution of the measurement device (3) around the axis (7) at least one of a wind speed and a wind direction,
**characterized in that**
the at least two measurement devices (3) are differently distanced from the axis (7).

2. Apparatus (1) according to claim 1, wherein
the processing unit (15) is configured to determine the wind speed or the wind direction on the basis of a maximum and a minimum measurement value during one revolution (R), preferably on the basis of the difference between the maximum and the minimum measurement value during one revolution (R), preferably during a current or preceding revolution (R).

3. Apparatus (1) according to claim 1 or 2, wherein
the processing unit (15) is configured to determine one of the wind speed and the wind direction on the basis of an amplitude (Y) of a sine wave resulting from the measurement values.

4. Apparatus (1) according to claim 3, wherein
the processing unit (15) is configured to determine the other of the wind speed and the wind direction on the basis of a phase (X) of the sine wave.

5. Apparatus (1) according to any one of claims 1 to 4, wherein
the measurement devices (3) and the rotation sensor (13) are configured to capture a wind property measurement value for at least every degree of rotation of the measurement devices (3) around the axis (7), preferably at a rotation rate of at least one revolution per second, preferably at a rotation rate of one to ten revolutions per second.

6. Apparatus (1) according to any one of claims 1 to 5, wherein
the at least two measurement devices (3) are arranged on one line orthogonal to and through the axis (7), preferably on one side of the axis (7) or on opposite sides of the axis (7).

7. Apparatus (1) according to any one of claims 1 to 6, wherein
the wind property measured by the measurement devices (3) is a wind speed or a wind direction.

8. Apparatus (1) according to any one of claims 1 to 7, wherein
the measurement devices (3) are connected to the axis (7) by an arm (9), and preferably a counterweight (11) is configured to compensate an imbalance created by the rotation of the measurement devices (3) around the axis, which counterweight (11) is preferably arranged on the arm (9) and/or in a different distance to the axis (7) compared to the measurement devices (3), and/or the drive unit (5) is a motor.

9. Apparatus (1) according to any one of claims 1 to 8, wherein
the measurement device (3) is one of a cup anemometer, vane anemometer, hot-wire anemometer, laser anemometer, sonic anemometer, pitot-tube anemometer, or vane.

10. Method for measuring a wind property with a wind property measurement apparatus (1), comprising the steps of:
- rotating at least two measurement devices (3) around an axis (7),
- measuring the wind property by the measurement devices (3), while
- determining the corresponding angular position of the measurement devices (3) around the axis (7) for each measurement value of the wind property during one revolution of the measurement devices (3) around the axis (7), and subsequently
- determining on the basis of the measurement values of the wind property at the corresponding angular position at least one of a wind speed and a wind direction,
**characterized in that**
the at least two measurement devices (3) are differently distanced from the axis (7).

11. Method according to claim 10, wherein
the processing unit (15) determines the wind speed or the wind direction on the basis of a maximum and a minimum measurement value during one revolution (R), preferably on the basis of the difference between the maximum and the minimum measurement value during one revolution (R), preferably during a current or preceding revolution (R).

12. Method according to claim 10 or 11, wherein
the processing unit (15) determines one of the wind speed and the wind direction on the basis of an amplitude (Y) of a sine wave resulting from the measurement values.

13. Method according to claim 12, wherein
the processing unit (15) determines the other of the wind speed and the wind direction on the basis of a phase (X) of the sine wave.

14. Method according to any one of claims 10 to 13, wherein
the measurement devices (3) and the rotation sensor (13) capture a wind property measurement value for at least every degree of rotation of the measurement devices (3) around the axis (7), preferably at a rotation rate of at least one revolution per second, preferably at a rotation rate of one to ten revolutions per second.

15. Use of at least one, preferably at least three, wind property measurement apparatus (1) or a method for measuring a wind property according to any one of the preceding claims in a ground control station and/or a launch system, preferably in a high altitude pseudo-satellite.
